# EUROPÄISCHE PATENTSCHRIFT

(11) **EP 4 022 204 B1**
(45) Veröffentlichungstag und Bekanntmachung des Hinweises auf die Patenterteilung: **02.10.2024**
(21) Anmeldenummer: 20745143.6
(22) Anmeldetag: 21.07.2020
(51) Int. Cl.: F16K 5/06, F16J 15/34

(54) **DICHTUNGSANORDNUNG FÜR EIN FLUIDVENTIL, FLUIDVENTIL UND FAHRZEUG**
SEAL ARRANGEMENT FOR A FLUID VALVE, FLUID VALVE AND VEHICLE
ENSEMBLE D'ÉTANCHÉITÉ CONÇU POUR UNE SOUPAPE À FLUIDE, SOUPAPE À FLUIDE ET VÉHICULE

(30) Priorität: 30.08.2019 DE 102019213134
(43) Veröffentlichungstag der Anmeldung: 06.07.2022
(73) Patentinhaber: Vitesco Technologies GmbH, 93055 Regensburg (DE)
(72) Erfinder: CHAVAN, Prashant, 81737 München (DE); ROZPUTNIAK, Dmytro, 81737 München (DE); DELPHO, Maik, 81737 München (DE)
(74) Vertreter: Vitesco Technologies
(86) Internationale Anmeldenummer: PCT/EP2020/070550
(87) Internationale Veröffentlichungsnummer: WO 2021/037443

(56) Entgegenhaltungen:
- DE-U1- 202017 000 564
- GB-A- 1 104 896
- US-B1- 6 186 511

## Beschreibung

Die vorliegende Erfindung betrifft eine Dichtungsanordnung, ein Fluidventil mit einer solchen Dichtungsanordnung sowie ein Fahrzeug mit einem solchen Fluidventil.

Unter einem solchen Fluidventil ist dabei insbesondere ein Kühlwasserventil - auch Kühlwassersteuer- oder Kühlwasserregelventil genannt - zur Verwendung in einem Fahrzeug zu verstehen.

Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln.

Dichtungen als solche können unterschiedliche Aufgaben haben. Sie können z.B. dem Zweck dienen, ungewollte Fluidverluste zu vermeiden oder zumindest zu begrenzen. Unter einem Fluid kann dabei ein flüssiges und/oder gasförmiges Medium verstanden werden.

Aus der GB 1104896 A und der US 6 186 511 B1 ist je eine Dichtungsanordnung bekannt. Und aus der DE 20 2017 000 564 U1 ist eine Dichtungsanordnung für ein sog. Mehrwegeventil bekannt.

Eine Aufgabe einer Ausführung der vorliegenden Erfindung ist es, eine Abdichtung zwischen einem Ventilgehäuse und einem verstellbaren, insbesondere verdrehbaren bzw. verschwenkbaren Ventilkörper zu verbessern.

Die Abdichtung soll dabei langzeit-dicht bleiben, und zwar unter bekanntlich großen Temperaturschwankungen einer Verbrennungsmotorenperipherie und/oder einer Elektromotorenperipherie.

Diese Aufgabe wird durch den Anspruch 1 gelöst, der eine Dichtungsanordnung zur Verwendung in einem Fluidventil eines Fahrzeugs unter Schutz stellt. Es wird ferner ein Fluidventil mit einer solchen Dichtungsanordnung unter Schutz gestellt (vgl. Anspruch 8). Ferner wird ein Fahrzeug mit einem solchen Fluidventil unter Schutz gestellt (vgl. Anspruch 12). Vorteilhafte Ausführungsformen der Erfindung sind Gegenstand der Unteransprüche.

Es wird eine Dichtungsanordnung für ein Fluidventil vorgeschlagen, umfassend:
- ein erstes, separates Dichtelement zur dichtenden Anlage gegen einen verschwenkbar stellbaren Ventilkörper des Fluidventils,
- ein zweites, separates Dichtelement zur dichtenden Anlage gegen ein Ventilgehäuse des Fluidventils sowie
- ein separates, elastisch verformbares Zwischenstück, welches in einer Axialrichtung der Dichtungsanordnung zwischen einer ersten Wandung des ersten Dichtelements und einer zweiten Wandung des zweiten Dichtelements zur elastischen Beabstandung der beiden Dichtelemente angeordnet ist, wobei die zweite Wandung der ersten Wandung gegenüber liegt.

An der ersten Wandung ist dabei ferner eine Vorsprungsanordnung angeformt, gegen welche das Zwischenstück unter Last zur Anlage bringbar ist, wobei die Vorsprungsanordnung bezüglich einer Dichtungsöffnung innen liegend zum Zwischenstück angeordnet ist, so dass das Zwischenstück die Vorsprungsanordnung dichtend umschließt.

Das Zwischenstück weist dabei wenigstens einen Axialabschnitt auf, dessen Querschnitt bezüglich der Dichtungsöffnung eine erste, radial äußere Mantelfläche und eine gegenüberliegende zweite, radial innere Mantelfläche aufweist. Die radial äußere Mantelfläche ist dabei zumindest abschnittsweise konkav und die radial innere Mantelfläche ist dabei zumindest abschnittsweise konvex.

Die Begriffe *konkav* bzw. *konvex* sind dabei wie bei optischen Linsen üblich zu verstehen.

Die vorgeschlagene Formgebung des Zwischenstücks verleiht der Dichtungsanordnung eine vorteilhafte Kraft-Weg-Kennlinie im Sinne einer Systemeigenschaft. Unter einer solch vorteilhaften Kraft-Weg-Kennlinie ist eine Kraft-Weg-Kennlinie zu verstehen, bei der eine auf das Zwischenstück aufgebrachte Kraft mit zunehmendem Verformungsweg des Zwischenstücks nur möglichst wenig und innerhalb gewisser Grenzen zunimmt, wobei sich die Zunahme progressiv, linear und/oder degressiv darstellen kann.

Die vorgeschlagene Formgebung ermöglicht ferner eine kontrollierte Verformung des Zwischenstücks, die als solche über einen breiten Längentoleranzbereich toleranzausgleichend wirkt. Bei dieser kontrollierten Verformung wird neben einer elastischen, axialen Kompression des Zwischenstücks zusätzlich eine elastische Biegung des besagten Axialabschnitts bzw. eines Bereiches um eine Querschnittsmitte des Zwischenstücks mit der konkaven Mantelfläche und der konvexen Mantelfläche realisiert. Je nach Ausprägung der Konkavität und Konvexität der jeweiligen Mantelfläche beschreibt der Querschnitt des Zwischenstücks zumindest im Wesentlichen eine druckaktivierbare V-Form, die als solche mit zunehmender Verformung ihre Dichtwirkung erhöht. Durch die sich darstellende günstige Kraft-Weg-Kennlinie (Systemeigenschaft) wird die Reibung im Fluidventil minimal gehalten und somit auch der elektrische Energieaufwand zur Verstellung des verdrehbaren bzw. verschwenkbaren Ventilkörpers, auch Dreh- oder Schwenkkolben genannt.

Nach einer Ausführung der vorliegenden Erfindung kann die konvexe, radial innere Mantelfläche gegenüber der konkaven, radial äußeren Mantelfläche eine stärkere Krümmung aufweisen. D.h., dass die Konvexität gegenüber der Konkavität stärker ausgeprägt sein kann.

Nach einer weiteren Ausführung der vorliegenden Erfindung kann zu beiden Seiten einer Querschnittsmitte des Zwischenstücks und umlaufend innenseitig bezüglich der Dichtungsöffnung je ein planer Mantelflächenabschnitt ausgebildet sein.

Nach einer weiteren Ausführung der vorliegenden Erfindung kann die besagte Vorsprungsanordnung als geschlossen umlaufender Vorsprung ausgestaltet sein. Alternative dazu ließe sich die Vorsprungsanordnung auch in Gestalt einer Anordnung von einzelnen, abschnittsweise umlaufenden, zueinander beabstandeten, klauenartigen Vorsprüngen bzw. Klauen ausgestalten.

Die beiden Dichtelemente und/oder das Zwischenstück können/kann jeweils ringförmig oder kreisringförmig ausgebildet sein.

Das erste Dichtelement und/oder das zweite Dichtelement kann/können als ein Hart-Dichtelement ausgebildet sein und/oder wenigstens ein Thermoplast, insbesondere PTFE, aufweisen. Es kann insbesondere hieraus bestehen, insbesondere urgeformt sein.

Zusätzlich oder alternativ dazu weist das erste Dichtelement und/oder das zweite Dichtelement in einer Ausführung wenigstens ein Elastomer, in einer Weiterbildung EPDM, auf. Es kann in einer Ausführung hieraus bestehen, insbesondere urgeformt sein.

Das Zwischenstück kann aus einem elastisch verformbaren Kunststoff, etwa einem Elastomer etc., ausgebildet sein.

Es wird ferner ein Fluidventil mit zumindest einer Dichtungsanordnung der zuvor beschriebenen Art vorgeschlagen. Das Fluidventil kann dabei in Gestalt eines Mehrwege-Ventils ausgebildet sein.

Es wird ferner eine Verwendung eines solchen Fluidventils als Kühlwassersteuerventil, insbesondere in einem Kühlkreislauf eines Fahrzeugs vorgeschlagen.

Zudem wird auch ein Fahrzeug mit einem Fluidventil der zuvor beschriebenen Art vorgeschlagen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: eine Ausführungsform einer vorgeschlagenen Dichtungsanordnung in einer perspektivisch dargestellten Einbaulage,

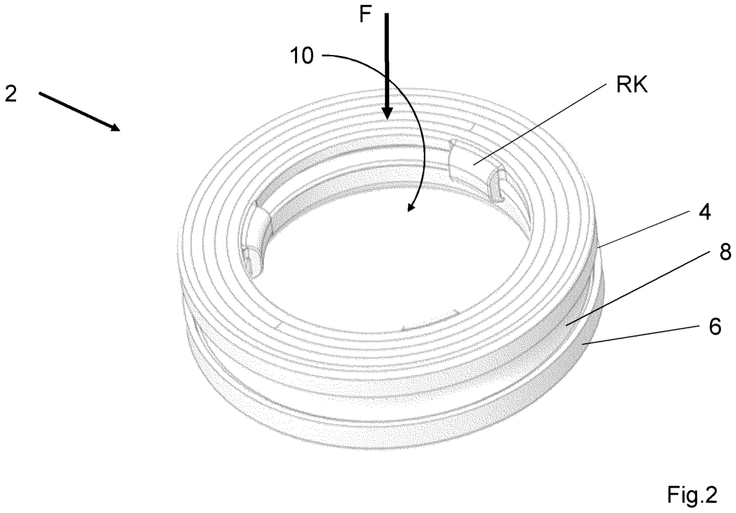

- Fig. 2: die in Fig.1 gezeigte Dichtungsanordnung in einer weiteren perspektivischen Ansicht,
- Fig. 3: die in Fig.1 und Fig.2 gezeigte Dichtungsanordnung in einer Explosions- und Schnittdarstellung,
- Fig.4: die in Fig.1 und Fig.2 gezeigte Dichtungsanordnung in einer weiteren Explosions- und Schnittdarstellung,
- Fig.5: verschiedene Formgebungen eines vorgeschlagenen, elastisch verformbaren Zwischenstücks sowie
- Fig.6: elastische Verformungen des in Fig.5 äußerst rechts gezeigten Zwischenstücks,

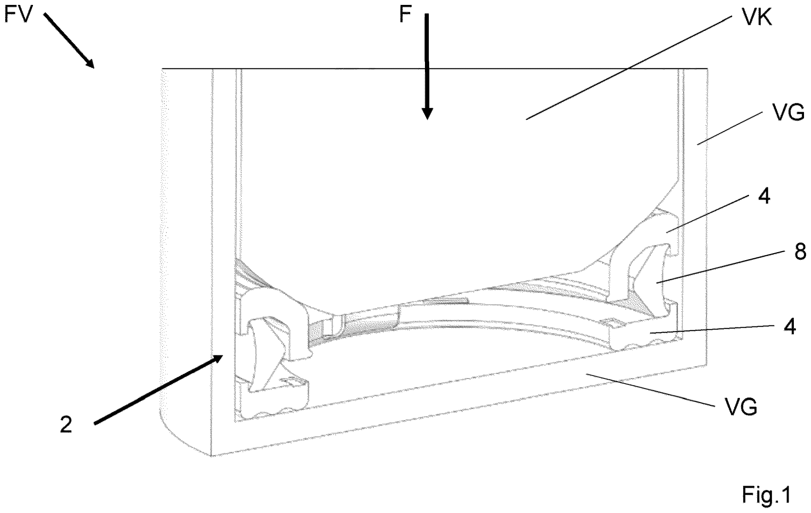

Das in Fig. 1 geschnitten gezeigte Mehrwege-Fluidventil bzw. Mehrwege-Kühlwassersteuerventil FV - auch Mehrwege-Kühlwasserregelventil genannt - umfasst eine Dichtungsanordnung 2 bzw. mehrteilige Dichtung 2 mit einem ersten, separaten Dichtelement 4, einem zweiten, separaten Dichtelement 6 sowie einem separaten, elastisch verformbaren Zwischenstück 8. Die beiden Dichtelemente 4, 6 sowie das Zwischenstück 8 sind dabei jeweils kreisringförmig ausgebildet, so dass sie zusammen eine kreisringförmige Dichtungsanordnung 2 bilden.

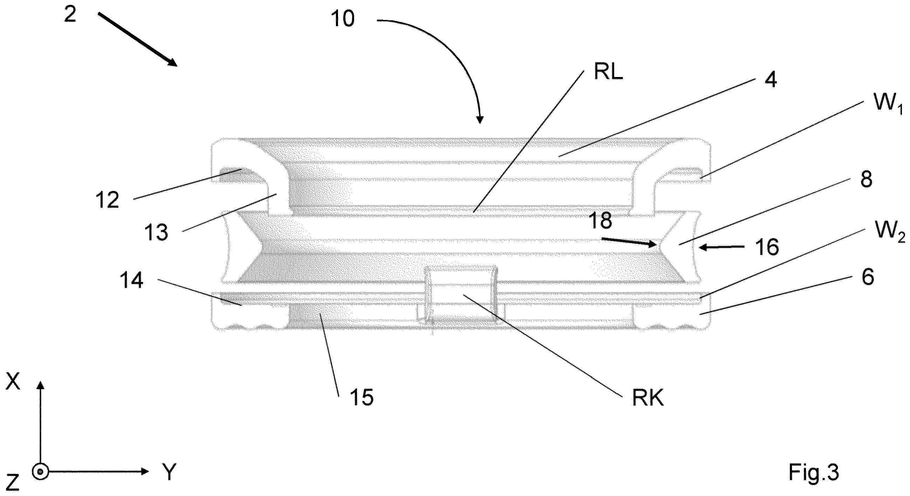

Das Dichtelement 4 liegt dabei dichtend an einem verschwenkbar bzw. verdrehbar stellbaren Ventilkörper VK - auch Dreh- oder Schwenkkolben genannt - des Fluidventils FV an. Das Dichtelement 6 hingegen liegt dichtend an einem Ventilgehäuse VG des Fluidventils FV an. Das Zwischenstück 8 ist dabei in einer Axialrichtung X - X der Dichtungsanordnung 2 zwischen einer ersten Wandung 12 des ersten Dichtelements 4 und einer zweiten Wandung 14 des zweiten Dichtelements 6 zur elastischen Beabstandung der beiden Dichtelemente 4, 6 angeordnet, wobei die zweite Wandung 14 der ersten Wandung 12 gegenüber liegt (vgl. z.B. Fig. 3).

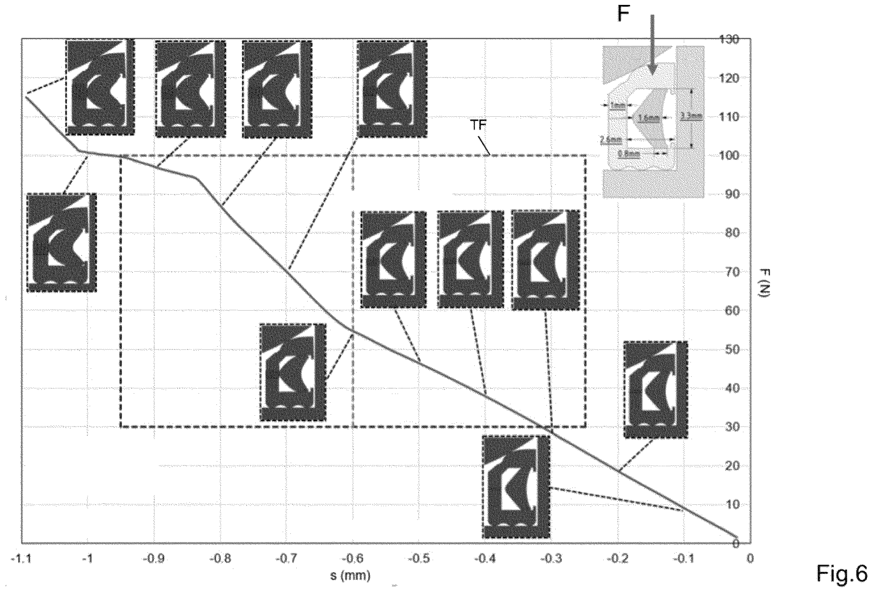

Am ersten Dichtelement 4 bzw. an dessen Wandung 12 ist ferner ein geschlossen umlaufender Vorsprung 13 angeordnet bzw. angeformt, der als solcher innen liegend zum Zwischenstück 8 angeordnet ist und gegen welchen das Zwischenstück 8 unter Last F zur Anlage bringbar ist (vgl. Fig. 6).

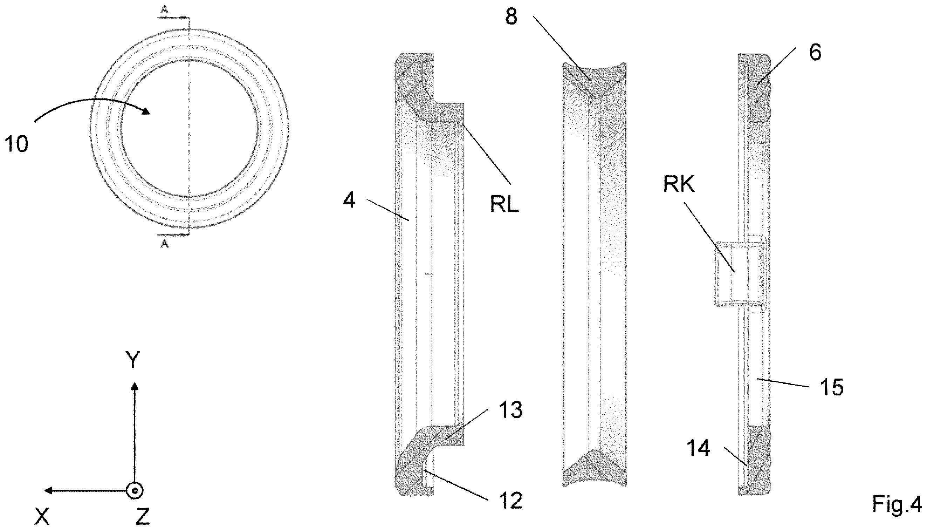

Das Zwischenstück 8 weist dabei eine Querschnittausbildung auf (vgl. Schnittlinie A - A in Fig. 4), die bezüglich der Dichtungsöffnung 10 eine erste, radial äußere und abschnittsweise konkav ausgeformte Mantelfläche 16 und eine gegenüberliegende zweite, radial innere und abschnittsweise konvex ausgeformte Mantelfläche 18 aufweist.

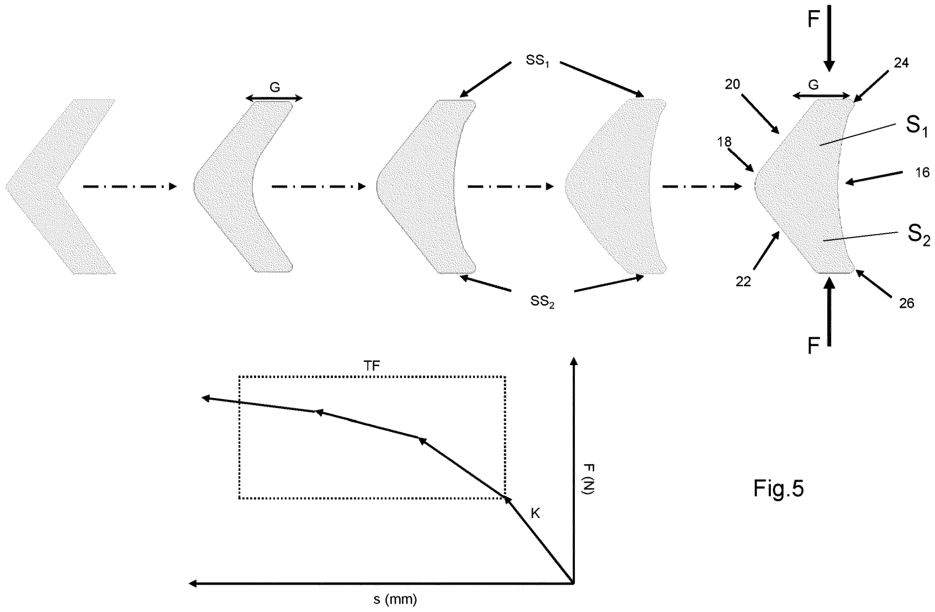

Die Querschnittsform des Zwischenstücks 8 beschreibt dabei ferner im Wesentlichen eine V-Form, auch wenn die konvexe Mantelfläche 18 gegenüber der konkaven Mantelfläche 16 idealerweise - wie durch rechnerische Simulationen belegbar ist - eine stärkere Krümmung aufweist (vgl. z.B. Fig. 5).

Zu beiden Seiten einer Querschnittsmitte des Zwischenstücks 8 und in Bezug auf die Dichtungsöffnung 10 umlaufend innenseitig ist je ein planer Mantelflächenabschnitt 20, 22 ausgeformt, der sich an die Mantelfläche 18 anschließt und sich bis zu einer zugeordneten Stirnseite SS₁, SS₂ des Zwischenstücks 8 erstreckt (vgl. z.B. Fig. 5).

Die beiden Dichtelemente 4, 6, oder auch nur eines davon, ist/sind ferner jeweils als ein Hart-Dichtelement ausgebildet.

Unter einem solchen Hart-Dichtelement ist dabei ein Dichtelement zu verstehen, welches zumindest an der dichtenden Kontaktstelle - ob linienförmig und/oder flächenförmig dichtwirkend - im Unterschied zum Zwischenstück 8 elastisch nicht verformbar ist, d.h. also starr ist. Grundsätzlich kann dieses Hart-Dichtelement bspw. vollumfänglich aus PTFE (PTFE steht dabei kurz für Polytetrafluorethylen) und/oder dergleichen mehr gefertigt, bspw. gespritzt sein. Alternativ dazu könnte dieses Hart-Dichtelement auch aus einem Kunststoff ausgebildet sein, der dichtseitig entsprechend hart beschichtet ist, etwa mit PTFE und/oder dergleichen mehr. Um Kosten einzusparen, könnte das zweite Dichtelement 6 auch nur aus einem gegenüber dem ersten Dichtelement 4 weicheren und kostengünstigeren Kunststoff ausgebildet sein.

Das Zwischenstück 8 hingegen - in Gestalt eines geschlossen umlaufenden Profils - ist aus einem elastisch verformbaren Kunststoff ausgebildet, etwa einem Elastomer etc., so dass sich unter einer axialen Last F die besagte axiale Beabstandung der beiden Dichtelemente 4, 6 entsprechend einer sich darstellenden, auszugleichenden Längentoleranzlage durch eine entsprechend elastische Verformung des Zwischenstücks 8 einstellen kann. Diese elastische Verformung bewirkt zudem die gewünschte Verspannung der Dichtungsanordnung 2 in ihrer Einbaulage (vgl. Fig. 1 oder Fig. 6).

Zwei solche Hart-Dichtelemente 4, 6 als solche, etwa in Gestalt zweier PTFE-Hart-Dichtelemente, in Verbindung mit dem Elastomer-Zwischenstück 8 bilden bereits eine Anordnung von gut aneinanderhaftenden Einzelteilen, die sich als eine Einheit leicht in das Fluidventil FV verbauen lassen. Die beiden PTFE-Hart-Dichtelemente 4, 6 verhindern zudem vorteilhafterweise eine Verkantung des Elastomer-Zwischenstücks 8 beim Verbau der Dichtungsanordnung 2.

Die vorgeschlagene Dichtungsanordnung 2 zeichnet sich dadurch aus, dass sie zum einen kostengünstig herstellbar ist und dass sie zum anderen über einen relativ breiten Längentoleranzbereich toleranzausgleichend wirkt, und dies in Verbindung mit einer Langzeitdichtwirkung. In Bezug auf das in Fig. 1 gezeigte Fluidventil FV (vgl. Fig.1) lassen sich mittels der Dichtungsanordnung 2 kumulierte Längentoleranzen von bis zu 1mm (≤ 1mm) und sogar darüber hinaus (≥ 1mm) ausgleichen.

Fig. 5 veranschaulicht verschiedene Formgebungen für das Zwischenstück 8, wobei die äußerst linke Formgebung in Fig. 5 einer nahezu ideellen V-Form entspricht, die sich als solche nur schwer bzw. aufwendig oder zumindest nur annähernd herstellen lässt. Von dieser ideellen V-Form ausgehend beschreibt die Fig. 5 eine iterative Annäherung zur äußerst rechts dargestellten, optimierten V-Form. All diese Formgebungen bzw. V - Formen realisieren unter einer Last F sowohl eine axiale, elastische Kompression bzw. Stauchung als auch eine Biegung in einem Bereich um die besagte Querschnittsmitte des Zwischenstücks 8.

Eine solche Formgebung bzw. V-Form weist eine sehr günstige Steifigkeitskennlinie K auf (vgl. Fig. 5). Darunter ist die in Fig. 5 qualitativ veranschaulichte Kraft-Wege-Kennlinie zu verstehen (F-s-Kennlinie). Diese Kraft-Wege-Kennlinie (bzw. Steifigkeitskennlinie K) befindet sich dabei mit Bezug auf einen definierten Längentoleranzbereich - etwa bis 1mm (≤ 1mm) - innerhalb des angedeuteten Toleranzfensters TF. Fig. 5 veranschaulicht dabei qualitativ eine innerhalb des Toleranzfensters TF degressive Steifigkeitskennlinie K.

Im Zuge der Verformung unter der Last F verformt sich der Querschnitt des Zwischenstücks 8 derart, dass die konvexe Mantelfläche 18 gegen den Vorsprung 13 zum Anliegen kommt (vgl. Fig. 6). Dabei gleiten die Stirnflächen SS₁, SS₂ entlang der jeweils zugeordneten Wandung 12, 14 quer zur Axialrichtung X - X der Dichtungsanordnung 2 (vgl. Fig. 5 i.V.m. z.B. Fig. 3; G = Gleiten). Dabei können, je nach Auslegung des Zwischenstücks 8 bzw. der Dichtungsanordnung 2, auch die beiden, z.B. konvex geformten Endabschnitte 24, 26 der zwei Schenkel S₁, S₂, oder auch nur einer dieser Endabschnitte 24, 26, zur Anlage gegen eine entsprechende Wandung W₁, W₂ eines zugeordneten Vorsprungs des jeweiligen Dichtelements 4, 6 kommen (vgl. in Fig. 3 oder Fig. 4).

Dies wird auch durch die Fig. 6 veranschaulicht, in der zu verschiedenen Punkten eines Kraft-Verformungsdiagramms einzelne Verformungszustände des Zwischenstücks 8 dargestellt sind. Man erkennt dabei auch, dass sich die Steifigkeitskennlinie über den gesamten Längentoleranzbereich von ca. -0,95 ≤ s ≤ -0,25 innerhalb des eingezeichneten Toleranzfensters TF befindet und dieses Toleranzfenster TF erst bei ca. -0,95 mm verlässt.

Die vorgeschlagene Formgebung des Zwischenstücks 8 verleiht der Dichtungsanordnung 2 eine vorteilhafte Kraft-Weg-Kennlinie (vgl. Fig. 5 oder Fig. 6) im Sinne einer Systemeigenschaft. Unter einer solch vorteilhaften Kraft-Weg-Kennlinie ist eine Kraft-Weg-Kennlinie zu verstehen, bei der eine auf das Zwischenstück 8 aufgebrachte Kraft F mit zunehmendem Verformungsweg s des Zwischenstücks nur möglichst wenig und innerhalb gewisser Grenzen zunimmt, wobei sich die Zunahme progressiv, linear und/oder degressiv darstellen kann.

Die vorgeschlagene Formgebung ermöglicht ferner eine kontrollierte Verformung des Zwischenstücks 8, die als solche über einen breiten Längentoleranzbereich toleranzausgleichend wirkt. Bei dieser kontrollierten Verformung wird neben einer elastischen, axialen Kompression des Zwischenstücks 8 zusätzlich eine elastische Biegung des Querschnitts - bzw. eines Bereiches um die besagte Querschnittsmitte - des Zwischenstücks 8 mit der konkaven Mantelfläche 16 und der konvexen Mantelfläche 18 realisiert. Je nach Ausprägung der Konkavität und Konvexität der jeweiligen Mantelfläche 16, 18 beschreibt der Querschnitt des Zwischenstücks 8 zumindest im Wesentlichen eine druckaktivierbare V-Form (vgl. Fig 5).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Dichtungsanordnung für ein Fluidventil (FV), umfassend:
ein erstes, separates Dichtelement (4) zur dichtenden Anlage gegen einen verschwenkbar stellbaren Ventilkörper (VK) des Fluidventils (FV),
ein zweites, separates Dichtelement (6) zur dichtenden Anlage gegen ein Ventilgehäuse (VG) des Fluidventils (FV) sowie
ein separates, elastisch verformbares Zwischenstück (8), welches in einer Axialrichtung (X - X) der Dichtungsanordnung (2) zwischen einer ersten Wandung (12) des ersten Dichtelements (4) und einer zweiten Wandung (14) des zweiten Dichtelements (6) zur elastischen Beabstandung der beiden Dichtelemente (4, 6) angeordnet ist, wobei die zweite Wandung (14) der ersten Wandung (12) gegenüber liegt,
wobei an der ersten Wandung (12) ferner eine Vorsprungsanordnung (13) angeformt ist, gegen welche das Zwischenstück (8) unter Last (F) zur Anlage bringbar ist, wobei die Vorsprungsanordnung (13) bezüglich einer Dichtungsöffnung (10) innen liegend zum Zwischenstück (8) angeordnet ist, so dass das Zwischenstück (8) die Vorsprungsanordnung (13) dichtend umschließt,
wobei das Zwischenstück (8) wenigstens einen Axialabschnitt aufweist, dessen Querschnitt bezüglich der Dichtungsöffnung (10) eine erste, radial äußere Mantelfläche (16) und eine gegenüberliegende zweite, radial innere Mantelfläche (18) aufweist,
wobei die radial äußere Mantelfläche (16) zumindest abschnittsweise konkav und die radial innere Mantelfläche (18) zumindest abschnittsweise konvex ist,
**dadurch gekennzeichnet, dass** der Querschnitt des Zwischenstücks (8) eine druckaktivierbare V-Form beschreibt, welche unter einer Last (F) sowohl eine axiale, elastische Kompression als auch eine Biegung in einem Bereich um eine Querschnittsmitte des Zwischenstücks (8) realisiert.

2. Dichtungsanordnung nach Anspruch 1, wobei die konvexe, radial innere Mantelfläche (18) gegenüber der konkaven, radial äußeren Mantelfläche (16) eine stärkere Krümmung aufweist.

3. Dichtungsanordnung nach Anspruch 1 oder 2, wobei zu beiden Seiten einer Querschnittsmitte des Zwischenstücks (8) und umlaufend innenseitig je ein planer Mantelflächenabschnitt (20, 22) ausgebildet ist.

4. Dichtungsanordnung nach einem der vorhergehenden Ansprüche, wobei die Vorsprungsanordnung (13) als geschlossen umlaufender Vorsprung ausgestaltet ist.

5. Dichtungsanordnung nach einem der vorhergehenden Ansprüche, wobei die beiden Dichtelemente (4, 6) und/oder das Zwischenstück (8) jeweils ringförmig oder kreisringförmig ausgebildet sind.

6. Dichtungsanordnung nach einem der vorhergehenden Ansprüche, wobei das erste Dichtelement (4) und/oder das zweite Dichtelement (6) als ein Hart-Dichtelement ausgebildet ist/sind.

7. Dichtungsanordnung nach einem der vorhergehenden Ansprüche, wobei das Zwischenstück (8) aus einem elastisch verformbaren Kunststoff ausgebildet ist.

8. Fluidventil mit zumindest einer Dichtungsanordnung (2) nach einem der vorhergehenden Ansprüche zur Abdichtung eines Anschlussbereiches des Fluidventils.

9. Fluidventil nach Anspruch 8 in Gestalt eines Mehrwege-Ventils.

10. Verwendung eines Fluidventils nach Anspruch 8 oder 9 als Kühlwassersteuerventil.

11. Verwendung nach Anspruch 10, wobei das Kühlwassersteuerventil in einem Kühlkreislauf eines Fahrzeugs verwendet wird.

12. Fahrzeug mit einem Fluidventil nach Anspruch 8 oder 9.

## Claims

1. Seal arrangement for a fluid valve (FV), comprising:
a first, separate sealing element (4) for sealing abutment against a pivotably adjustable valve body (VK) of the fluid valve (FV),
a second, separate sealing element (6) for sealing abutment against a valve housing (VG) of the fluid valve (FV), and
a separate, elastically deformable intermediate piece (8), which is arranged, in an axial direction (X - X) of the seal arrangement (2), between a first wall (12) of the first sealing element (4) and a second wall (14) of the second sealing element (6) for elastically spacing apart the two sealing elements (4, 6), wherein the second wall (14) is situated opposite the first wall (12),
wherein, on the first wall (12), there is furthermore integrally formed a projection arrangement (13), against which the intermediate piece (8) is able to be brought into abutment under a load (F), wherein the projection arrangement (13) is arranged inside the intermediate piece (8) in relation to a seal opening (10), such that the intermediate piece (8) sealingly encloses the projection arrangement (13),
wherein the intermediate piece (8) has at least one axial section whose cross section has, in relation to the seal opening (10), a first, radially outer lateral surface (16) and an oppositely situated second, radially inner lateral surface (18),
wherein the radially outer lateral surface (16) is at least sectionally concave, and the radially inner lateral surface (18) is at least sectionally convex,
**characterized in that** the cross section of the intermediate piece (8) describes a pressure-activatable V shape which, under a load (F), realizes both axial,
elastic compression and bending in a region around a cross-sectional centre of the intermediate piece (8).

2. Seal arrangement according to Claim 1, wherein the convex, radially inner lateral surface (18) has a greater curvature than the concave, radially outer lateral surface (16).

3. Seal arrangement according to Claim 1 or 2, wherein, on both sides of a cross-sectional centre of the intermediate piece (8) and at the inner side in a running-around manner, there is formed in each case a planar lateral surface section (20, 22).

4. Seal arrangement according to one of the preceding claims, wherein the projection arrangement (13) is formed as a projection which runs around in a closed manner.

5. Seal arrangement according to one of the preceding claims, wherein the two sealing elements (4, 6) and/or the intermediate piece (8) are in each case/is of ring-shaped or circular-ring-shaped form.

6. Seal arrangement according to one of the preceding claims, wherein the first sealing element (4) and/or the second sealing element (6) are/is in the form of a hard sealing element.

7. Seal arrangement according to one of the preceding claims, wherein the intermediate piece (8) is formed from an elastically deformable plastic.

8. Fluid valve having at least one seal arrangement (2) according to one of the preceding claims for sealing off a connection region of the fluid valve.

9. Fluid valve according to Claim 8, in the form of a multi-way valve.

10. Use of a fluid valve according to Claim 8 or 9 as a cooling-water control valve.

11. Use according to Claim 10, wherein the cooling-water control valve is used in a cooling circuit of a vehicle.

12. Vehicle having a fluid valve according to Claim 8 or 9.

## Revendications

1. Agencement d'étanchéité pour une soupape de fluide (FV), comprenant :
un premier élément d'étanchéité (4) séparé pour l'application étanche contre un corps de soupape (VK) réglable de manière pivotante de la soupape de fluide (FV),
un deuxième élément d'étanchéité (6) séparé pour l'application étanche contre un boîtier de soupape (VG) de la soupape de fluide (FV), et
une pièce intermédiaire (8) séparée, élastiquement déformable, qui est agencée dans une direction axiale (X - X) de l'agencement d'étanchéité (2) entre une première paroi (12) du premier élément d'étanchéité (4) et une deuxième paroi (14) du deuxième élément d'étanchéité (6) pour espacer élastiquement les deux éléments d'étanchéité (4, 6), la deuxième paroi (14) étant opposée à la première paroi (12),
un agencement de saillie (13) étant en outre formé sur la première paroi (12), contre lequel la pièce intermédiaire (8) peut être amenée en application sous charge (F), l'agencement de saillie (13) étant agencé à l'intérieur par rapport à la pièce intermédiaire (8) au regard d'une ouverture d'étanchéité (10), de telle sorte que la pièce intermédiaire (8) entoure de manière étanche l'agencement de saillie (13),
la pièce intermédiaire (8) présentant au moins une section axiale dont la section transversale par rapport à l'ouverture d'étanchéité (10) présente une première surface d'enveloppe radialement extérieure (16) et une deuxième surface d'enveloppe radialement intérieure (18) opposée,
la surface d'enveloppe radialement extérieure (16) étant concave au moins par sections et la surface d'enveloppe radialement intérieure (18) étant convexe au moins par sections,
**caractérisé en ce que** la section transversale de la pièce intermédiaire (8) décrit une forme en V activable par pression, qui réalise sous une charge (F) à la fois une compression élastique axiale et une flexion dans une zone autour d'un centre de section transversale de la pièce intermédiaire (8).

2. Agencement d'étanchéité selon la revendication 1, dans lequel la surface d'enveloppe convexe, radialement intérieure (18) présente une courbure plus importante que la surface d'enveloppe concave, radialement extérieure (16) .

3. Agencement d'étanchéité selon la revendication 1 ou 2, dans lequel une section de surface d'enveloppe plane (20, 22) est configurée des deux côtés d'un centre de section transversale de la pièce intermédiaire (8) et autour de celle-ci, côté intérieur.

4. Agencement d'étanchéité selon l'une quelconque des revendications précédentes, dans lequel l'agencement de saillie (13) est conçu sous forme de saillie périphérique fermée.

5. Agencement d'étanchéité selon l'une quelconque des revendications précédentes, dans lequel les deux éléments d'étanchéité (4, 6) et/ou la pièce intermédiaire (8) sont respectivement configurés sous forme annulaire ou circulaire.

6. Agencement d'étanchéité selon l'une quelconque des revendications précédentes, dans lequel le premier élément d'étanchéité (4) et/ou le deuxième élément d'étanchéité (6) est/sont configurés sous la forme d'un élément d'étanchéité dur.

7. Agencement d'étanchéité selon l'une quelconque des revendications précédentes, dans lequel la pièce intermédiaire (8) est configurée en une matière plastique élastiquement déformable.

8. Soupape de fluide avec au moins un agencement d'étanchéité (2) selon l'une quelconque des revendications précédentes pour assurer l'étanchéité d'une zone de raccordement de la soupape de fluide.

9. Soupape de fluide selon la revendication 8, sous la forme d'une soupape à voies multiples.

10. Utilisation d'une soupape de fluide selon la revendication 8 ou 9 en tant que soupape de commande d'eau de refroidissement.

11. Utilisation selon la revendication 10, dans laquelle la soupape de commande d'eau de refroidissement est utilisée dans un circuit de refroidissement d'un véhicule.

12. Véhicule avec une soupape de fluide selon la revendication 8 ou 9.
